# EUROPÄISCHE PATENTSCHRIFT

(11) **EP 0 239 959 B1**
(45) Veröffentlichungstag und Bekanntmachung des Hinweises auf die Patenterteilung: **02.06.1993**
(21) Anmeldenummer: 87104623.1
(22) Anmeldetag: 27.03.1987
(51) Int. Cl.: H04B 3/38, H04L 27/24

(54) **Verfahren für die Übertragung analoger und/oder digitaler Information, insbesondere unter Zwischenschaltung einer, 2er oder mehrerer Vermittlungen in Fernmeldeanlagen**
Analogous and/or digital information transmission method, particularly with the insertion of one, two or several exchanges in telecommunication installations
Procédé de transmission d'une information analogique et/ou numérique en particulier avec insertion d'un, de deux ou de plusieurs postes de liaison dans des installations de télécommunication

(30) Priorität: 29.03.1986 DE 3610761; 01.09.1986 DE 3629706; 26.01.1987 DE 3702202
(43) Veröffentlichungstag der Anmeldung: 07.10.1987
(73) Patentinhaber: Dirr, Josef, D-81679 München (DE)
(72) Erfinder: Dirr, Josef, D-81679 München (DE)

(56) Entgegenhaltungen:
- EP-A- 0 110 427
- DE-A- 861 579
- DE-A- 3 010 938
- DE-A- 3 133 397
- US-A- 2 081 312

## Beschreibung

Die vorliegende Erfindung befasst sich mit einem Verfahren für die Codierung und Übertragung von Information zwischen Endstellen und der Vermittlungsstelle oder zwischen Endstellen und Endstellen unter Zwischenschaltung einer oder mehrerer Vermittlungen, insbesondere für Fernsprech- und ISDN-Vermittlungsanlagen.

Ein grosses übertragungstechnisches Problem bei der Übertragung von Information über Verbindungswege, insbesondere von Teilnehmer bezw. Endstelle zu Teilnehmer über Weitverbindungswege mit Vermittlungen und Verstärkern stellen die Rückkopplungskreise dar. Um die Stabilität der Verbindungen zu gewährleisten werden an die Gabeln und die Nachbildungen erhebliche Anforderungen gestellt. Der ideale Zustand wäre natürlich eine 4-drähtige Verbindung vom rufenden zum gerufenen Teilnehmer. Die Ortsvermittlungsstellen OVSt sind aber immer 2-drähtig ausgeführt. Eine Umstellung auf 4-Drahtbetrieb wäre aus wirtschaftlichen Gründen nicht möglich. Es sind zwar schon Lösungen bekannt bei denen für einzelne Verbindungsabschnitte ein Quasi-4-Drahtbetrieb vorgesehen wurde. Bei einem Nachrichtensystem dieser Art, insbesondere bei TF-Systemen, wurden durch elektrische Filterweichen und durch eine Gabelschaltung eine Trennung beider Richtungen in den jeweiligen Endstellen durchgeführt. Weiterhin ist ein WT-System nach dem 2Dr Frequenzgetrenntlage-Verfahren bekannt bei dem ebenfalls durch eine Filteranordnung eine Trennung der beiden Übertragungsrichtungen vorgenommen wird. Alle diese Verfahren sind nur für Verbindungsleitungen konzipiert. Bekannt sind auch schon Quasi-4-Draht-Teilnehmeranschlussleitungen, bei denen durch einen Echokompensator die über die Gabel ankommenden Sendesignale im Empfangszweig vermindert werden. Auch bei diesen Schaltungen muss noch mit einer Rückkopplung gerechnet werden. Die neuen elektronischen Vermittlungssysteme haben ausserdem den Nachteil, dass sie nicht kompatibel sind, d.h. die Wähler der Ortsvermittlungen sind codeabhängig, müssen für eine digitale Durchschaltung ausgeführt sein.

Aufgabe der vorliegenden Erfindung ist es nun ein Vermittlungssystem für Fernsprechen und ISDN zu schaffen, das von Teilnehmer zu Teilnehmer 4-drähtig betrieben werden kann und das mit den vorhandenen Systemen kompatibel ist. Dies wird durch mehrere Varianten erreicht und zwar indem im Ortsbetrieb der gehende und kommende Verkehr in der normalen Sprachfrequenzlage, oder die eine Richtung in der normalen Sprachfrequenzlage und die andere Richtung mit Codierwechselströmen über dem Sprachbereich durchgeführt wird und im Fernbetrieb der Verkehr der einen Richtung in normaler Sprachfrequenzlage und die andere Richtung mit Codierwechselströmen über dem Sprachbereich erfolgt. Es können auch im Orts- und Fernbetrieb beide Richtungen mit Codierwechselströmen verschiedener Frequenz bezw. Frequenzlagen betrieben werden. Die Umwandlung der Information in Codierwechselströme erfolgt dabei insbesondere über eine PAM- oder PAM/PCM-Codierung in der Weise, indem die Codeelemente durch die Amplituden der Halbwellen bezw. Perioden eines Wechselstromes oder wahlweise durch die Amplituden Phasenlagen bezw. Frequenzen , Phasendifferenzen bezw. Halb-oder Perioden dauern, Periodenzahl gebildet werden. Bei Bedarf können noch Mittel für die Trennung beider Verkehrsrichtungen vorgesehen werden.

Gemäss den CCITT-Empfehlungen sind bei einer internationalen Verbindung 14 Analog/Digital-Wandlerpaare zugelassen, wobei 5 auf den nationalen Bereich fallen. Bei der Erfindung werden solche Analog/Digital-Wandlerpaare durch einfache Mittel, beinahe ohne Rückkopplung, ersetzt. Mit dieser lassen sich auch vorhandene 2-Drahtverbindungen auf Quasi-4-Drahtverbindungen umstellen. So kann man bereits schon vom Teilnehmer aus über eine 2-Drahtvermittlungsstelle bis zur Fernverbindung eine Quasi-4Dr.-Verbindung herstellen. Wie im Patentanspruch 1 offenbart, sind hierzu lediglich die Informationen der Sende-und Empfangsrichtung mit verschiedenen Frequenzlagen auszustatten. Vorteilhaft wählt man einen Analog_oder Digitalcode bei dem die Amplituden der Halbwellen oder Perioden eines Wechselstromes einer Frequenz als Codeelemente verwendet werden, wobei für jede Richtung ein anderer Codewechselstrom vorgesehen wird. Man kann auch eine Richtung im Sprachsignalbereich belassen und nur die andere Richtung codieren. Im Ortsverkehr kann man evtl. beide Richtungen im Sprachbereich belassen. Der Fernsprechapparat ggf. auch die Einrichtungen für das Bildfernsprechen und für die Datenübertragung müssen dann entsprechend umgestellt werden. Da es bei den Fernsprechapparaten um Massenartikel handelt,macht es keine Schwierigkeiten entsprechende Chips billig herzustellen, denn grosse Stückzahlen machen die Mikroelektronik erst recht billig. Wird die Codierung auf dem Prinzip der Pulsamplitudenmodulation nach dem Patent Canadian Nr. 1214277 bezw.nach der europäischen Patentanmeldung EP 0110427 A2 vorgenommen bei denen die Codierung analog durch die Grösse der Amplituden der Halbwellen eines Wechselstromes erfolgt,-Durch Verwendung mehrerer Codierwechselströme kann die Frequenz herabgesetzt werden- so können die Vermittlungsstellen VSt mit elektronischen Koppelfeldern ausgerüstet werden. Elektronische Koppelfelder sind ein Massenprodukt, daher ist es zweckmässig beim Aufbau gar keine Zwischenleitungen, sondern eine 100%tige Erreichbarkeit vorzusehen. Im Fernverkehr kann die Erfindung auch bei vorhandenen Trägerfrequenzeinrichtungen eingesetzt werden. Besonders geeignet ist die Erfindung für den Fernverkehr bei Verwendung von Zeitmultiplexeinrichtungen, wenn entweder eine analoge Codierung wie oben angeführt, oder eine digitale Codierung mit einem Wechselstrom nach dem deutschen Patent DE 30 10 938 C2 erfolgt. Will man bei analoger Codierung bei der Übertragung noch grössere Sicherheit haben, kann man den Wechselstrom auf der Basis der Frequenzmodulation übertragen. Weiterhin zeigt die Erfindung auf, wie man unabhängig von der Anschlussleitung die Eingabelautstärke der Sprache lautstärkegetreu zum gerufenen Teilnehmer überträgt. Die Auswertung in gehender Richtung , beispielsweise in der Teilnehmerschaltung muss unabhängig von der Dämpfung der Anschlussleitung erfolgen. Dies kann man auf verschiedene Weise durchführen. Man kann individuell jeder Anschlussleitung Dämpfungsglieder zuordnen,oder zentralen Gliedern , wie z.B. Verbindungssätzen , veränderbare Dämpfungsglieder, die in Abhängigkeit von der Leitungsdämpfung des jeweiligen Teilnehmers eingestellt werden, oder man kann auch durch eine individuelle Messung der jeweiligen Anschlussleitung durch Vergleich eine Werteanpassung vornehmen.

Die Vermittlung kann auch mit den Multiplexern und Koppelfeldern und den Hierarchiestufen wie solche in den Systemen EWSD und S 12 verwendet werden , erfolgen. Da bei der vorliegenden Erfindung ein quasi-4-Draht-Betrieb bereits vom Teilnehmer aus vorgesehen ist, sind die Anschlussgruppen wesentlich anderst aufgebaut. Die Durchschaltung erfolgt dabei immer quasi-4-drahtmässig.

Die Teilnehmerzählung erfolgt bei den bekannten Systemen während des Gespräches mit 16 KHz Impulsen. Dadurch wird natürlich die Qualität der Übertragung sehr beeinflusst. Vorteilhaft wird bei der vorliegenden Erfindung dem Teilnehmer das Meldekennzeichen übertragen. Die Gebührenerfassung erfolgt dann beim Teilnehmer selbst. Die Zone kann dabei von der Vermittlungsstelle übertragen werden, oder beim Teilnehmer selbst aus der Kennzahl ermittelt werden. Eine solche Anordnung ist bereits schon durch die Offenlegungschrift DE 33 03 669.1 bekannt und es wird deshalb nicht näher darauf eingegangen.

Nachstehend wird nun die Erfindung an Hand der Zeichnungen näher erläutert. Diese stellen dar:
- Fig.1:: Gabelschaltungen einer 2Dr/4Dr bezw.4Dr./2Dr.Verbindung
- Fig.2:: Übergangsphasen eines Netzes vom 2-Draht zum 4-Draht Betrieb.
- Fig.3:: Durchlasskurve eines mechanischen Filters.
- Fig.4:: Durchlasskurve eines Quarzfilters.
- Fig.5:: Ein Quasi-4Dr.-Weg mit 2 Codierwechselströmen.
- Fig.6:: Ein Quasi-4-Dr.-Weg für den Fernverkehr über vorhandene Trägerfrequenzsysteme (TF).
- Fig.7:: Ein herkömliches Trägerfrequenzsystem.
- Fig.8:: Eine Frequenzherabsetzung eines binären Codierwechselstromes
- Fig.9:: Gegenüberstellung eines unipolaren binären Signals und des AMI-Codes zum Codewechselstrom.
- Fig.10:: Eine mögliche Leitungsführung Endvermittlungsstelle-Zentralvermittlungsstelle.
- Fig.11:: Zeitmultiplexe Zusammenfassung von Codierwechselströmen zu einem Codierwechselstrom und Übertragung auf der Basis der Frequenzmodulation.
- Fig.12:: Verbindungsübersicht einer Anordnung gemäss der Erfindung.
- Fig.13:: Frequenzmodulation in Abhängigkeit von Amplitude und Frequenz.
- Fig.14 25,26:: Pulsamplitudenmodulation mit einem oder mehreren Codierwechselströmen und deren Erzeugung.
- Fig.15:: Vorhandenes Trägerfrequenzsystem bei dem über einen Kanal 2 Sprachkanäle übertragen werden.
- Fig.16:: Wechselstromcodierung mit den Amplituden der Halbwellen und Addition von Codewechselströmen mit Zeitkoppelstufe.
- Fig.17:: Zeitmultiplexe Anordnung beim Teilnehmer.
- Fig.18:: Mehrwertige Amplitudencodierung.
- Fig.19+20:: TF-Systeme für Einfrequenzcodierwechselströme.
- Fig.21:: Eine Amplituden/Phasencodierung.
- Fig.22:: Schaltung für Phasenverschiebung.
- Fig.23/24:: Schaltung zur Erzeugung von Amplitudenstufen für einen Codierwechselstrom.
- Fig.27:: Eine PAM-Abtast-und Halteschaltung
- Fig.28:: Eine Umwandlung von Wechselstrom-in Gleichstrompulse
- Fig.29:: Zwei Multiplexer mit einer 90 Grad phasenverschiebung und einer quadraturmodulierten Übertragung beim Tln.
- Fig.30:: Übersicht einer Quadraturmodulation
- Fig.31:: Teilnehmerschaltung mit Multiplexer
- Fig.32:: Gleichrichtung der Codeelemente für Abgriff
- Fig.33:: Koppelfeldanordnung
- Fig.34:: EB-Übertragung eines Codewechselstromes mit Schwundausgleich.
- Fig.35:: Teilnehmerschaltung
- Fig.36/37:: Digitaler undanaloger Code

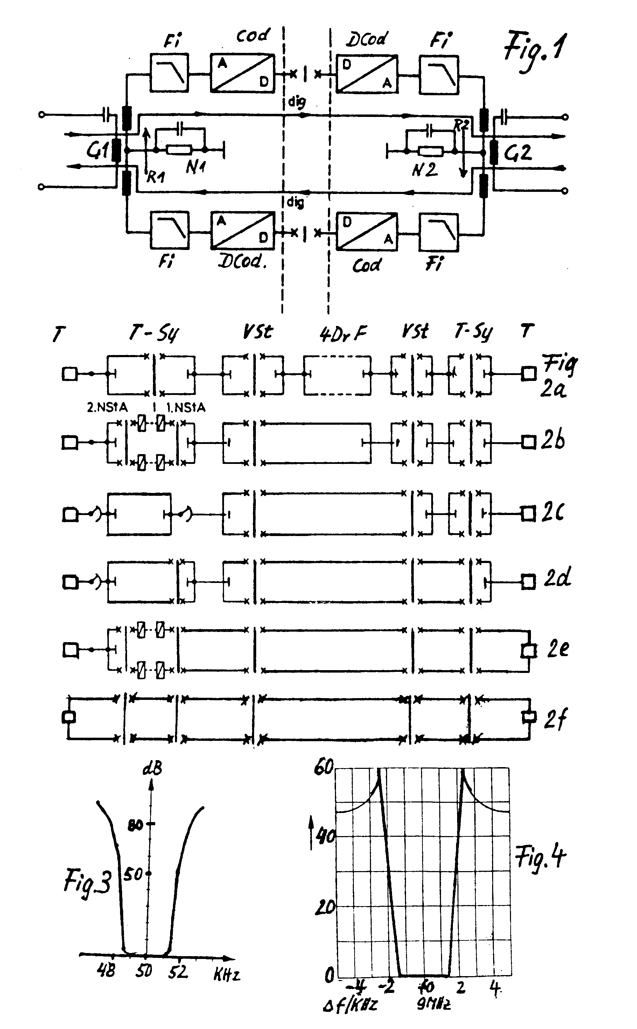

In der Fig.1 ist die übertragungstechnische Struktur eines PCM-Vermittlungssystems dargestellt. An die Gabeln G1/G2 und an die Nachbildungen N1/N2 werden hohe Ansprüche gestellt, damit die Rückflüsse R1/R2 möglichst klein gehalten werden können. Der eine Sprechweg geht über die Gabel G1, über das Filter Fi, den Analog/Digitalcodierer A/D über die Digitalvermittlung dig, dann auf der Empfangsseite zum Decodierer D/A und über das Filter Fi und die Gabel G2 zu einer Endvermittlung. Die Gegenrichtung ist genau so aufgebaut.

In der Fig. 2 werden die Übergangsphasen eines Verbindungsnetzes von 2-Dr.Gemischtbetrieb auf reinen 4-Dr.Betrieb wie in den Fig. 2a bis 2f dargestellt ist, gezeigt. Vom Teilnehmer T geht die Verbindung zum Teilnehmersystem T-Sy z.B Nebenstellenanlage NStA zur Vermittlungsstelle VSt , über eine 4-Dr.Fernverbindung 4 Dr.F , über die VSt, T-Sy zum gerufeneen Teilnehmer T. In der Fig.2f ist eine reine 4 Dr.Verbindung dargestellt.

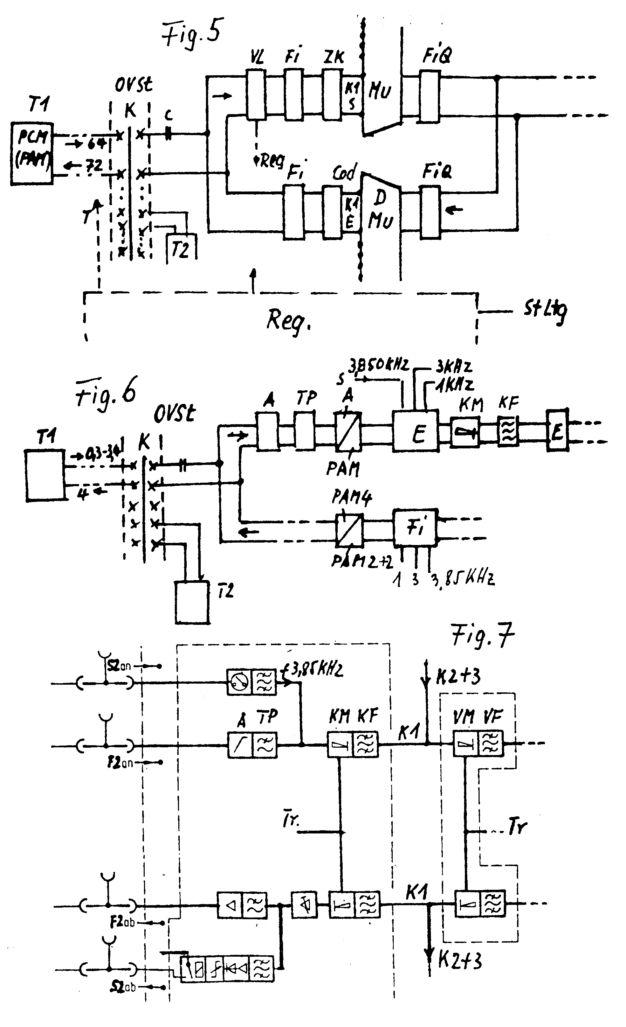

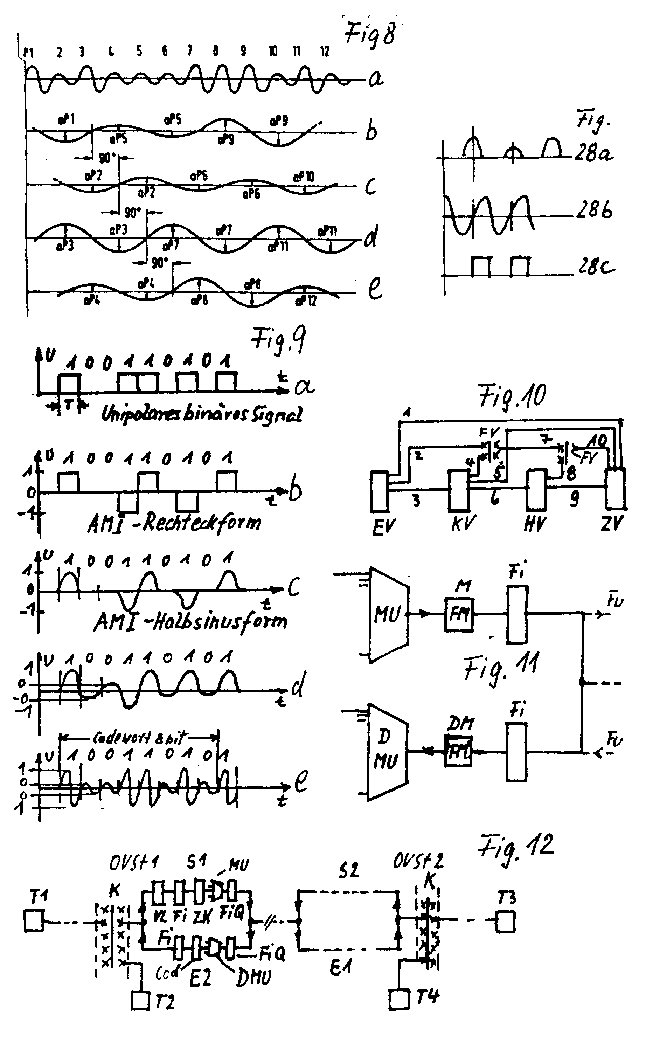

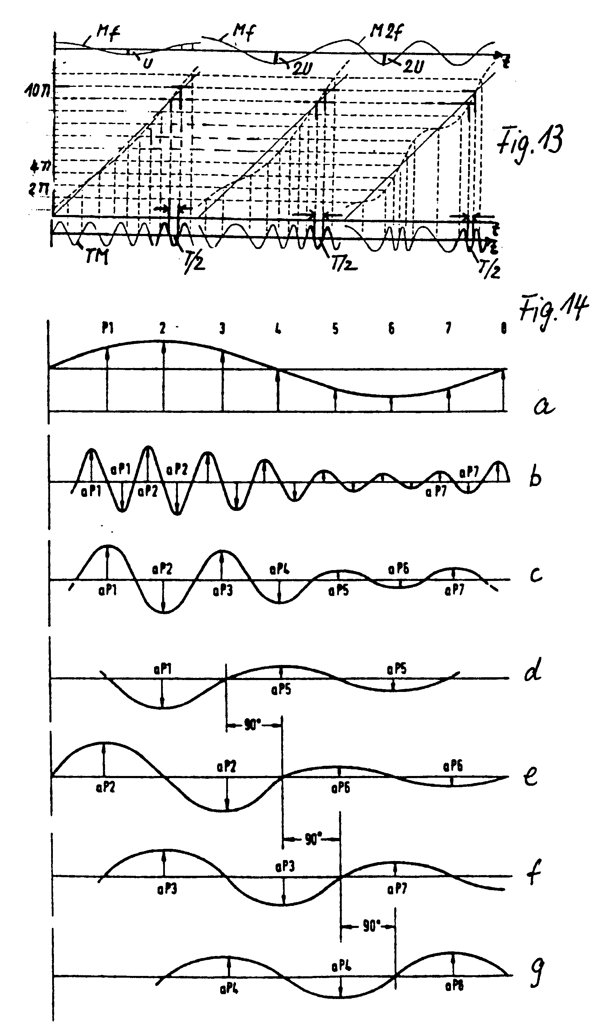

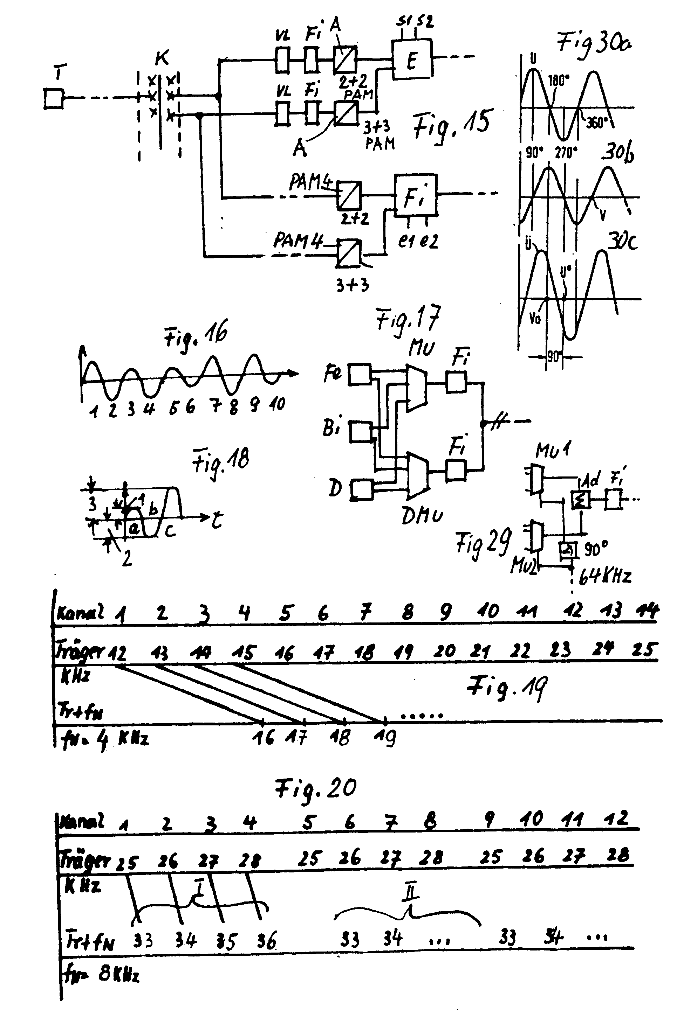

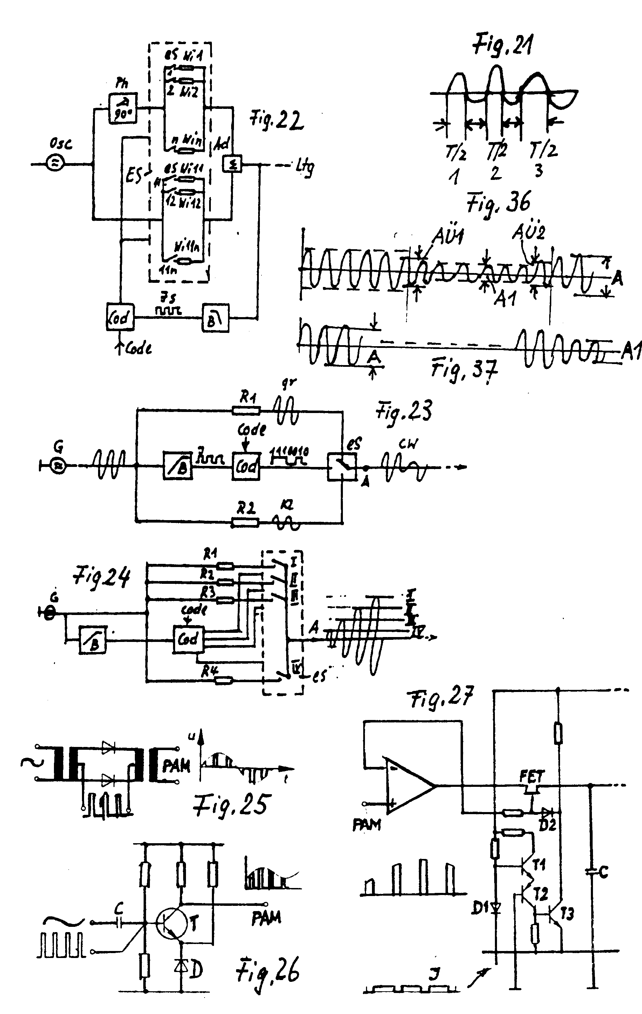

Die Fig.5 zeigt eine Anordnung gemäss der Erfindung. Sendeseitig wird ein Codierwechselstrom von 64 KHz und empfangsseitig von 72 KHz vorgesehen. Es handelt sich hier um einen binären Digitalcode. Das Prinzip ist in Fig.9 dargestellt. Zuerst wird dieser näher erläutert. Bei diesem Code werden binäre Codeelemente wie sie in den Fig. 9a,9b und 9c dargestellt sind (1,0) aus den Halbwellen oder Perioden gebildet, die in einer ununterbrochenen Folge von positiven und negativen Halbwellen gesendet werden. In der Fig. 9d ist ein Code aus Halbwellen und in der Fig.9e ein solcher aus den Perioden dargestellt. Entscheidend ist dabei die ununterbrochene Folge. In Fig.9c ist ein AMI-Code mit Halbsinusform und Null dargestellt. Bei diesem erhält man natürlich ein wesentlich breiteres Frequenzband als in den Fig.9d/e. Noch breiter wird das Band in der Fig.9b, wenn Rechteckimpulse verwendet werden. In den Fig.9d/e sind die Kennzustände ein grosser und ein kleiner Amplitudenwert. In der Fig.5 wird bei 64 bezw. 72 KHz die Periode als Codeelement verwendet. Bei einem Abgriff von 8 KHz und 8 bit Code für die Pulsamplitude ist ein Codewechselstrom von 64 KHz und bei einem Abgriff von 9KHz und 8 bit-Code für die Pulsamplitude von 72 KHz erforderlich. Das Koppelfeld K in der Ortsvermittlungsstelle OVSt sei elektromechanisch, also durchlässig für die Frequenzen des Codierwechselstromes. Wird im Ortsverkehr der Teilnehmer T2 angerufen,so ist bei diesem die Empfangsfrequenz 64KHz und die Sendefrequenz 72 KHz. In den Fernsprechapparaten sind Mittel zur Unterscheidung des "Rufens" und "gerufen werden". Im Fernverkehr ist die Verbindung abgehend über eine Verlängerungsleitung VL, das Filter Fi, die Zeitkoppelstufe ZK an den Zeitmultiplexer Mu geschaltet. Die Verlängerungsleitung VL soll die verschieden langen Anschlussleitungen aneinander angleichen. Die unterschiedliche Längeneinschaltung der VL wird im Beispiel durch das Register Reg vorgenommen. In diesem ist die Länge bezw. der Widerstands Wert jeder Anschlussleitung gespeichert. Man kann dies auch durch eine Messung machen, z.B. indem die Wahlkriterien vom Teilnehmer mit einem bestimmten Pegel gesendet werden und diese im Register oder individuell in der abgehenden Fernwahlübertragung gemessen werden. Man kann auch vom Register aus den Teilnehmer einen Wechselstrom, mit dem durch die Zahl der Perioden die Wahlkriterien codiert werden, senden. Durch eine Widerstandsänderung beim Teilnehmer wird dann durch Messung des zurückfliessenden Wechselstromes das jeweilige Ende der Kriteriengabe festgestellt, wie eine solche im Patent DE 2915452 C2, Patentanspruch 3 unter Schutz gestellt ist. Damit kann man dann auch den Widerstand der Anschlussleitung feststellen. Das Filter Fi ist ein mechanisches Filter , das eine grosse Flankensteilheit wie Fig.3 zeigt, aufweist.ZK ist eine Zeitkopplerstufe, das dem Multiplexer zeitlich geordnet , hier die binären Kennzustände übergibt. In dieser kann man auch entsprechend der Fig.23 verfahren indem man mit einem Begrenzer B eine Steuerung eines elektronischen Schalters vornimmt, der dann eine Gleichrichtung des Codierwechselstromes nach dem Prinzip der kohärenten Demodulation vornimmt. In einem Kondensator kann man dann den jeweiligen Amplitudenwert speichern. Die negative Halbwelle wird dabei nicht benötigt. Bei der nächsten positiven Halbwelle wird der Kondensator wieder auf den nächsten Amplitudenwert geladen, ähnlich wie in Fig.27 der Kondensator C. Dadurch, dass während einer Periode, hier im Beispiel , der Kondensator mit dem Wert der Amplitude geladen bleibt, ist es dem Zeitmultiplexer Mu überlassen, wann der Abgriff erfolgt, d.h. alle Verbindungen einer Richtung können wahlweise an den Zeitmultiplexer angeschaltet werden, ohne Rücksicht darauf, welche Phase der Codierwechselstrom beim Teilnehmer hat. An den Multiplexer sind natrülich die Verbindungen festangeschaltet Anschalteänderungen können aber beliebig vorgenommen werden. Der Codierwechselstrom muss also vom Register aus nicht synchronisiert werden. Will man ganz exakt die Ladung des Kondensators steuern, so muss man verfahren, wie aus der Fig. 28 hervorgeht. Der Codierwechselstrom entspricht dem in der Fig. 8a dargestellten, in der die Periode als Codeelement vorgesehen ist.In der Fig.28a wird vom diesem Codierwechselstrom immer die negative Halbwelle unterdrückt. In der Fig.28b ist ein Wechselstrom gleicher Frequenz dargestellt, der jedoch um 90 Grad phasenverschoben ist. Dieser Wechselstrom wird einem Begrenzer entsprechend der Fig.23, B, zugeführt wie in der Fig.28c gezeigt wird Impulse entstehen. Jeder Impulse beginnt mit dem Amplitudenwert der positiven Halbwellen des Codierwechselstromes. Mi⁺ einem elektronischen Schalter wird dann der jeweilige Amplitudenwert kurzzeitig an den Kondensator geschaltet. Solch eine elektronischer Schalter kann durch einen Feldeffekttransistor dargestellt werden, wie ein solcher in der Fig.27 mit FET bezeichnet ist.Sind im Multiplexer Mu 10 Kanäle zusammengefasst, dann ist ein Codewechselstrom von 10x64 KHz = 640 KHz erforderlich. Dieser wird nun über ein Quarzfilter FiQ an die Leitung geschaltet. Im Multiplexer wird jedem Amplitudenwert der Kanäle eine positive und eine negative Halbwelle zugeordnet. Die Erzeugung von grossen und kleinen Amplituden ist in der Fig.23 dargestellt. Der Codierwechselstrom von 640 KHz wird im Generator G erzeugt. Einmal wird er über den Widerstand R1 dem elektronischen Schalter eS und einmal über den Widerstand R2 ebenfalls dem elektronischen Schalter es zugeführt. Der Schalter eS schaltet also Stromkreise mit verschiedenen Widerständen an den Ausgang A, d.h. die Halbwellen oder Perioden sind verschieden gross. Die Steuerung des Schalters eS durch einen Code erfolgt mit Hilfe von Synchronisierimpulsen J, die im Begrenzer B durch denselben Wechselstrom erzeugt werden. Auf dieselbe Weise wird auch der 64 KHz und der 72 KHz Codierwechselstrom beim Teilnehmer erzeugt. Über feste Leiter kann man beide Richtungen 2-Draht übertragen. Durch die Filter FiQ für 640 und 720 KHz werden beide Richtungen voneinander getrennt. Empfangsseitig geht der 720 KHz Codierwechselstrom über das Filter FiQ zum Demultiplexer DMu. In diesem wird jedem der 10 Kanäle das jeweilige Codeelement in Form eines kleinen oder grossen Spanungsimpulses zugeordnet.Diese Impulse werden im Codierer Codden Perioden des 72 KHz Wechselstromes aufgedrückt. Über ein mechanisches Filter Fi für 72 KHz gelangt dann dieser über den Koppler K zum Teilnehmer T1. Bei diesem sind die entsprechenden Einrichtungen zur Auswer tung der pulscodemodulierten Sprache aus dem Codierwechselstrom von 72KHz. Die Teilnehmererkennung und die Wegesteuerung erfolgt über das Register Reg und die Steuerung der anderen Vermittlungsstellen über eine Steuerleitung StLtg. Nimmt man die Halbwelle als Codeelement, so sind nur Frequenzen von 32 bezw. 36 KHz für die Codierwechselströme erforderlich. Die Filter FiQ können dann ebenfalls durch mechanische ersetzt werden. Man kann auch nach der Methode der Fig.8 die Frequenz des Codierwechselstromes verkleinern. In der Fig.8a ist der Codierwechselstrom 8 KHz und das Codeelement die Periode. Will man an Stelle von 8 KHz 2 KHz Codierwechselströme so kann man 4 Probeentnahmefrequenzen mit je 2 KHz vorsehen, die gegeneinander um 90 Grad phasenverschoben sind. Diese Probeentnahmen werden dann den Perioden von Wechselströmen, die ebenfalls gegeneinander um 90 Grad phasenverschoben sind und synchron zur Abgriffsfrequenz sind, aufgedrückt. Man sieht aus der Fig.8 , dass die Wechselströme b,c,d und e gegeneinander um 90 Grad phasenverschoben sind. Der 2 KHz Wechselstrom der Fig.2b codiert die Probeentnahmen P1,P5,P9,.., der 2 KHz Wechselstrom der Fig.2c die Probeentnahmen P2,P6,P10, ... Auf der Basis der Quadraturamplitudenmodulation könnte man immer zwei um 90 Grad phasenverschobene Wechselströme zusammenfassen (addieren). Man kann a ber auch nur 2 Codierwechselströme 4 KHz vorsehen, die um 180 Grad gegeneinander phasenverschoben sind. Will man die beiden quadraturamplitudenmoduliert über einen Kanal übertragen, so muss einer der beiden noch um 90 Grad vor der Übertragung phasenverschoben werden. Man hat hier also Möglichkeiten die Frequenz zu teilen , zu vierteilen usw. Wählt man z.B.die Halbwelle als Codeelement ist bei einer Abgriffsfrequenz von 8 KHz ein Codierwechselstrom von 4 KHz und bei 2 um 180 Grad phasenverschobene Abgriffsfrequenzen von 4 KHz 2 Codierwechselströme von 2 KHz erforderlich. Bei einer Phasenverschiebung des einen Wechselstromes um 90 Grad und Addition dieser beiden Codierwechselströme von 2 KHz, wäre bei einem 8 bit-Codewort für eine Probeentnahme ein Additionswechselstrom für einen Sprachkanal von 16 KHz erforderlich.

An Stelle einer Pulscodemodulation kann man auch eine Pulsampli tudenmodulation verwenden. In der Fig.14 ist das Prinzip dargestellt. In der Fig.14a ist ein Schwingungszug mit den Probeentnahmen P1 bis P8 aufgezeichnet. Die Probeentnahmen werden entweder bipolar entsprechend der Fig.25 oder unipolar entsprechend der Schaltung der Fig.26 abgegriffen. In der Fig.14a sind die Probeentnahmen unipolar dargestellt. Eine Abtastschaltung ist in der Fig.27 aufgezeichnet. Die Werte der Probeentnahmen werden nun entweder den Perioden eines Wechselstromes mit der Abgriffsfrequenz, hier 8 KHz, also einem Codierwechselstrom von 8 KHz oder aber den positiven und negativen Halbwellen eines Codierwechselstromes mit der Frequenz 4 KHz aufgeprägt. In der fig. 14b ist ein 8 KHz Codierwechselstrom dargestellt. Sowohl die positive als auch die negative Halbwelle nehmen dann denselben Amplitudenwert an, also die Probeentnahme P1 , die positive Halbwelle aP1 und die negative Halbwelle aP1, die Probeentnahme P2, die Halbwellen aP2/aP2, usw. In der Fig. 14c ist beim Codier wechselstrom die Halbwelle als Codeelement vorgesehen. Die Probeentnahme P1 wird der Halbwelle aP1, die Probeentnahme P2 der Halbwelle aP2 aufgedrückt usw. In der Fig.14 wird also eine analoge Übertragung der Probeentnahmen auf die Amplituden der Halbwellen des Codierwechselstromes vorgenommen. Wie bereits bei den Fig.8b bis e beschrieben, kann man eine Frequenzteilung bezw. Vierteilung usw. durch zeitmultiplexe Zuordnung der Probeentnahmen an Codierwechselströme mit der 1/2, 1/4 Frequenz der Summe der Abgriffe erhalten, wobei diese Codierwechselströme gegeneinander um 360 Grad durch 2, durch 4 usw. phasenverschoben sind und um Zwischenspeicherungen der Probeentnahmen zu vermeiden muss eine Synchronisation zwischen dem Abgriff und den Codierwechselströmen bestehen. In den Fig.14d bis g sind die Codierwechselströme um den vierten Teil niedriger als die Folgefrequenz der Abgriffe. Deshalb sind diese auch gegeneinander um 90 Grad phasenverschoben. Ist also die Abgriffsfrequenz 8 KHz bezw. 4x2 KHz mit einer gegenseitigen Phasenverschiebung von 90 Grad, so haben die Codierwechselströme eine Frequenz von 2 KHz bei einer gegenseitigen Phasenverschiebung von 90 Grad.Werden die Halbwellen nur eines Codierwechselstromes als Codeelemente vorgesehen, dann ist ein Codierwechselstrom von 4 KHz erforderlich. Werden 2 um 180 Grad versetzte Codierwechselströme verwendet, dann ist die Frequenz 2x2 KHz . Wird einer dieser Codierwechselströme um 90 Grad phasenverschoben und dann beide addiert, so kann die gesamte Nachricht mit einem Wechselstrom von 2 KHz übertragen werden. Bei Verwendung einer PAM-Codierung erhält man z.B. folgende Möglichkeiten an Frequenzen, und zwar für senden oder empfangen: 8 KHz/12 KHz, 4KHz/6 KHz, 2 KHz/3KHz Man kann diese Frequenzen auch variieren, z.B. 8 KHz mit 3KHz usw. Man kann auch den Ortsverkehr wie bisher abwickeln und nur beim Fernverkehr einen Code vorsehen. Beim Teilnehmer muss dann z.B. mit der Verkehrsausscheidungsziffer O eine Umschaltung auf Codierung vorgenommen werden. Man kann vom Teilnehmer aus auch nur eine Richtung codieren z.B. die Senderichtung wie bisher im Bereich bis 3.4 KHz belassen, der Empfangsrichtung einen Codewechselstrom von z.B. 4 oder 6 KHz zuordnen. Damit kein Rückfluss von der Empfangsseite in die Sendeseite erfolgt, müssen entsprechende Filter vorgesehen werden. Je grösser der Frequenz-Abstand zwischen den beiden Richtungen ist, desto wirtschaftlicher können die Filter eingesetzt werden.

Beim Multiplexer Mu und DMu kann auch ein Kanal für die Übertragung von Steuer- und Wahlkriterien vorgesehen werden, der zweckmässig vom Register aus gesteuert wird.

In der Fig.6 ist eine Schaltung für die Verwendung der Erfindung bei vorhandenen TF-Systemen dargestellt. In der Fig. 7 ist der bisherige Aufbau der Eingangsstufe eines TF-Systems aufgzeichnet. F2an ist die Senderichtung des Sprachkanals . Über einen Amplitudenbegrenzer A und einen Tiefpass TP wird die Sprache im Frequenzbereich von 300 Hz bis 3.4KHz dem Kanalmodulator KM und parallel dazu die Signale mit 3.85 KHz KHz zugeführt. Im Kanalfilter KF wird der Träger und das obere Seitenband ausgesiebt. Zusammen mit den Kanälen 2+3 werden dann die Seitenbänder dem Vorgruppenmodulator VM zugeführt, usw. Ankommend werden die Kanäle K1 bis K3 im Filter VF ausgesiebt und dem Vorgruppenmodulator VM zugeführt. Die Filter KF sieben die einzelnen Kanäle auseinander. Über den Modulator KM, einen Verstärker, einen Tiefpass gelangen dann die ankommenden Sprachsignale über F2ab zur Gabel. Die Steuersignale gelangen über einen gesonderten Weg S2ab zur Fernwahlübertragung. In Fig.6 wickelt sich der Ortsverkehr im Bereich des Sprachbandes ab. Im Fernverkehr werden in Senderichtung die Sprachwechselströme über die Vermittlungsstelle mit dem Koppelfeld K zum Amplitudenbegrenzer A und dem Tiefpass TP dem Analog/Pulsamplitudenmodulationswandler A/PAM zugeführt. Die Sprachsignale werden in diesem in einen Codewechselstrom 2+2 umgewandelt. Die Probeentnahmen werden dabei zuerst auf die Halbwellen zweier um 180 Grad phasenverschobener Codierwechselströme übertragen. In der folge wird einer davon um 90 Grad phasenverschoben. Beide werden dann addiert und als ein Wechselstrom mit der Frequenz von 2 KHz übertragen, bezw. einem Entkoppler E zugeführt. An diesen sind auch die Signale mit 3,85 KHz und 2 Datenkanäle mit 3 und 1 KHz geschaltet. Über den Kanalmodulator KM und über das Kanalfilter KF gelangen dann die Seitenbänder zu höheren Stufen des TF-Systems. Ankommend wird das TF-Gemisch nach den Demodulationsstufen einem Filter Fi zugeführt, indem eine Trennung der 1, 2, 3 und 3.85KHz Wechselströme erfolgt. Der Sprachcodewechselstrom 2+2 wird im PAM-2+2/PAM 4-Wandler in einen Codierwechselstrom von 4 KHz umgewandelt, und dem Teilnehmer T1 über die Koppelanordnung K zugeleitet. Ein Rückfluss in die Senderichtung wird durch den Tiefpass TP verhindert. Beim Teilnehmer ist eine Auswerteeinrichtung die den Codierwechselstrom in die Sprachwechselströme umwandelt. Bei Verwendung von 4 KHz Codierwechselströmen sind elektronische Koppelfelder einsetzbar. Sind elektromechanische vorhanden , kann man z.B. auch einen Codierwechselstrom von 6 KHz vorsehen.

An Stelle der Datenkanäle 3 KHz und 1 KHz kann man über denselben TF-Kanal einen 2. Sprachkanal schalten. In der Fig.15 ist eine Schaltung hierfür dargestellt. Der Codierwechselstrom 2+2 bleibt wie bisher. Über einen anderen Ausgang des Koppelfeldes K wird dann die Verbindung an den Analog/PAM-Wandler 3+3PAM geführt und über einen Entkoppler einem Kanalmodulator zugeführt. S1 und S2 sind die Signaladern für beide Kanäle und zwar im Beispiel 3,85 KHz für den einen und 1 KHz für den anderen Kanal. Empfangsmässig werden im Filter Fi, die Wechselströme von 3.85,3,2,und 1 KHz getrennt und einmal einem Wandler 2+2/4 zugeführt, der den Additionswechselstrom von 2 KHz in einen Codewechselstrom von 4 KHz umwandelt, und zum Teilnehmer überträgt, und das andere mal wird der 3+3KHz Additionswechselstrom in einen Codewechselstrom von 4 KHz umgeformt, und zum rufenden Teilnehmer übertragen.

Man kann die TF-Systeme auch wesentlich anderst anordnen In den Fig. 19 und 20 sind 2 Beispiele dargestellt. In der Fig.19 ist der Trägerabstand 1 KHz. Den Kanälen 1,2,3,..14 sind die Träger 12,13,..25 KHz zugeordnet. Wird das untere Band und der Träger ausgefiltert, so erhält man nach der Modulation bei einem Codierwechselstrom fN von 4 KHz, die Seitenbänder bezw. Frequenzen von 16,17,18,...KHz. In der Fig.20 sind die Kanäle 1 bis 12 in 3 Vierergruppen unterteilt und den Trägern 25, 26,27 und 28 KHz zugeordnet. Der Codierwechselstrom fN ist 8 KHz. Wird der Träger und die untere Seitenfrequenz ausgefiltert, so hat eine Gruppe jeweils die Frequenzen 33,34,35 und 36 KHz.

Bei den pulscodemodulierten Signalen kann man genau so wie bei anderen Codes Regeneratoren einsetzen. Bei pulsamplitudenmodulierten Wechselströmen entsprechend den Fig.14b,c ist dies auch möglich, wenn man einen Kanal als Vergleichskanal mit konstanter Amplitude vorsieht, sodass Amplitudenschwankungen analog auf die Nutzkanäle übertragen werden können .

In der Fig.11 erfolgt , um unabhängig von Amplitudenschwankungen zu sein, die Übertragung des Codierwechselstromes auf der Basis der Frequenzmodulation. Im Multiplexer MU werden die verschiedenen Kanäle zu einem Codierwechselstrom, wie bereits in der Fig.5 beschrieben, zusammengefasst , einem Frequenzmodulator zugeführt und über ein Filter auf die Leitung gegeben. Sende-und Empfang kann über eine Leitung erfolgen, man kann den Betrieb auch 4-drähtig vornehmen. Bei Richtfunk und auch bei anderen Funkdiensten kann man den frequenzmodulierten Codierwechselstrom auf der Basis der Einseitenbandmodulation dem Sendewechselstrom aufmodulieren. Da die Information nur durch die Grösse der Amplituden festgelegt wird, also unabhängig von der Frequenz, ist auch bei einer Frequenzmodulation ein wesentlich schmäleres Band erforderlich, wie aus der Fig.13 hervorgeht. Mf ist die Modulationsschwingung einmal mit der Amplitude u und dann mit der Amplitude 2u, M2f ist eine Modulationsschwingung mit der Amplitude 2u und der Frequenz 2f. Wie aus dem moduliertem Träger TM hervorgeht ist die Periodendauer T/2 bei der Modulationsschwingung mit doppelter Amplitude und doppelter Frequenz am kleinsten. Da sich im vorliegenden Fall nur die Amplitude ändert, ist infolgedessen die Bandbreite des frequenzmodulierten Trägers wesentlich kleiner als bei einer zusätzlichen Änderung der Frequenz.

In der Fig.12 ist eine Verbindung von der OVSt1 zur OVSt2. Ruft der Teilnehmer T1 den Teilnehmer T3 an, so entsteht eine Verbindung über die Koppelfeldanrodnung K der OVSt1 über die Einrichtungen der Sendeseite S1, 2drähtig über den Fernweg über die Empfangseinrichtungen E1, die Koppelfeldanordnung K der OVSt2 zum Teilnehmer T3. Die Sprechrichtung von T3 geht über S2, die 2-drähtige Fernleitung, dann über E2 zum Teilnehmer T1.

Eine möglicher Netzaufbau von der Endvermittlungsstelle zur Zentralvermittlungsstelle ZV ist in der Fig.10 dargestellt. Direkte Verbindungen gehen hier von der Endvermittlungsstelle EV zur Knotenvermittlungsstelle KV und von dieser zur Hautvermittlungsstelle HV und von dieser zur Zentralvermittlungsstelle. In den Fernwegen können natürlich Regeneratoren erforderlich sein, die nicht eingezeichnet sind. Diese können dabei 2-oder 4-drähtig eingeordnet sein, je nachdem was im jeweiligen Fall wirtschaftlicher ist. Wenn von der EV zur ZV genügend grosse Bündel erforderlich sind wird man ein direktes Bündel schalten. Sind beide örtlich durch grosse Entfernungen getrennt, so kann man z.B. über Richtfunk eine 4-drähtige Führung vornehmen. Bei Koaxialkabeln und Glasfaser entscheidet die Wirtschaftlichkeit ob man 2-oder 4-Draht wählt. Zusätzlich kann man Fernvermittlungen FV vorsehen, falls dadurch eine bessere Leitungsausnützung erreicht wird. Je nach Codierung kann man die Vermittlungen mit elektronischen Koppelfeldern ggf. sogar mit 100%ger Erreichbarkeit ausrüsten. Bei Fernvermittlungen kommen aufgrund der Informationsbündelung (Bandbreite) nur elektromechanische Koppelfelddr in Betracht.

Die Art der Codierungist sehr günstig für das ISDN-Netz geeignet. In der Fig.17 sind Endeinrichtungen für Fernsprechen Fe, für die Bildübertragung Bi, ggf. Bildfernsprechen und für die Datenübertragung D dargestellt. Für die Zusammenfassung der Codeelemente ist der Multiplexer Mu und fürdie Verteilung der Demultiplexer DMu vorgesehen. Da die Codierung in der Amplitudengrösse der Halbwellen festgelegt ist, kann der Multiplexer digitale als auch PAM-codierte Signale erfassen. Angneommen wird, sendeseitig wird ein Summencodierwechselstrom von 64KHz festgelegt. Dieser kann nun aufgeteilt werden in Sprache, Bild und Daten, z.B. für die Sprache könnte man bei Verwendung von Halbwellen als Codeelemente und bei einem binären Digitalcode (Fig.9d) 32 KHz verwenden die übrigen 32 KHz würden dann für Bild+Daten übrig bleiben. Würde man die übrigen 32KHz für Bild oder Daten vorsehen, so hätte man für die Bildübertragung 64 Kbit zur Verfügung. Wie aber die Western Electric Company in der Auslegeschrift DE 1135954 feststellt ist für den Betrachtungsabstand des Telefonierers ein Bild von 2,5x2,5 cm mit etwa 3600 Bildelementen ausreichend wobei ein neues Bild in jeder Sekunde erforderlich sei. Aus dem geht hervor, dass 32 Kbit für die Bildübertragung beim Bildfernsprechen ausreichend sind und dass man damit grössere Bilder darstellen kann. Durch entsprechende Anordnung der Multiplexer und/oder durch eine entsprechende Codierung lässt sich noch mehr an Information übertragen. Verwendet man die Halbwellen als Codeelemente, so hat man 128Kbit bei 64 KHz Codierwechselstrom. Werden nun 2 Multiplexer parallel betrieben mit je einem 64 KHz Codierwechselstrom, die aber gegeneinander um 90 Grad phasenverschoben sind, und addiert beide, so kann man mit diesem 64 KHz Wechselstrom256 Kbit übertragen. Dabei sind aber die unteren Frequensbereiche noch ungenutzt. Man käme also auch mit einem Codierwechselstrom von 32 KHz oder auch von 16 KHz aus. In der Fig.29 sind 2 parallele Multiplexer M1 und M2 dargestellt. Diese werden mit einem 64 KHz Codierwechselstrom versorgt, wobei bei der einen Zuführung ein Phasenschieber von 90 Grad vorgesehen ist. Beide Codierwechselströme werden im Addierer Ad zusammengeschaltet und über ein Filter auf die Leitung gegeben. Wie aus der Fig.30 hervorgeht, entsteht bei der Addition der beiden um 90 Grad phasenverschobenen Wechselströme der Fig.30a und 30b ein Wechselstrom gleicher Frequenz wie in der Fig.30c dargestellt. Bei der Trennung der beiden Wechselströme ist ein Bezugswinkel erforderlich, der z.B. durch kurzzeitiges Senden eines der beiden Wechselströme der Fig.30a oder 30b ermittelt werden kann. Solche Auswertungen sind bekannt. - Die Addition zweier Codierwechselströme gleicher Frequenz kann natürlich auch bei der Übertragung über Fernleitungen vorgesehen werden, wie z.B. in Fig.5 2 Multiplexer und Demultiplexer , dasselbe gilt auch für die Fig.11. Vor dem Frequenzmodulator müsste die Zusammenschaltung erfolgen und beim Empfang die Auswertung bezw. Trennung der beiden Wechselströme nach dem Demodulator DM. - Kleinere Frequenzen kann man auch durch mehrstufige Codierungen erhalten. In Fig.18 ist ein 3 stelliges und ein dreistufiges Codewort dargestellt. Die Stellen werden durch die Halbwellen und die Stufen durch verschieden grosse Amplituden gebildet. In Fig.18 ergeben sich 3 hoch 3 Möglichkeiten, also 27. Bei binärer Codierung wären nur 2 hoch 3, also 8 Kombinationen möglich. Man könnte auch zusätzlich einen Phasencode vorsehen. In Fig.21 z.B.sind 3 Amplituden-und 3 Phasenstufen dargestellt. 3 Halbwellen haben verschiedene Halbperidodendauern T/2. Zusätzlich könnte man noch die Richtung der Phasenänderung als weitere Stufe vorsehen. Die Auswertung der Phasenänderung kann dabei mit Bezugsphase oder auch durch die Auswertung der Änderung je Codewort bezw. Differenzphase erfolgen. In der Fig.22 ist die Erzeugung einer solchen Phasenänderung dargestellt. Der Codierwechselstrom wird im Osc erzeugt und in 2 Stromkreise verteilt. In dem einem Stromkreis ist ein Phasenschieber Ph von 90 Grad vorgesehen. Ausserdem ist in jedem dieser Stromkreise eine Anordnung mit Widerständen, die in Abhängigkeit von dem Codierer Cod je nach gewünschter Phasenänderung zu oder abgeschaltet werden. Beide Stromkreise werden dann wieder im Addierer zusammengeführt und der Summenwechselstrom auf die Leitung gegeben. Je nach Grösse der Vektoren der beiden um 90 Grad gegeneinander verschobenen Wechselströme ist die Phasenlage des Summenwechselstromes,d.h. mit einer Widerstandsänderung in einem oder beiden Stromkreisen wird auch eine Änderung der Phasenlage des Summenwechselstromes bewirkt. Die Widerstände werden durch elektronische Schalter betätigt, die vom Codierer aus gesteuert werden. eS1 bis esn bezw. es11 bis 11n sind die elektronischen Schalter und Wi1 bis Win bezw. Wi11 bis Wi11n die dazugehörigen Widerstände. Damit die Phasenänderung nur beim Nulldurchgang erfolgt, wird der Summenwechselstrom abgezweigt und einem Begrenzer B zugeführt, in dem Impulse Js erzeugt werden, mit denen dann der Codierer Cod nur beim Nulldurchgang des Summenwechselstromes gesteuert wird.

In der Fig.16 ist ein Codierwechselstrom für einen Binärcode mit den Halbwellen als Codeelemente und den Kennzuständen grosse und kleine Amplitude dargestellt.

Wo Gleichstromfreiheit erforderlich, wird man die Periode als Codeelement wählen. Eine Kompandierung bei der PCM ist nicht unbedingt erforderlich da ein Geräuschabstand von 65 dB auch mit 11 Codeelementen bei einer Binärcodierung erreicht wird. Bei den vorliegenden Codierungen können auch Regeneratoren eingesetzt werden, dasselbe gilt auch für die Frequenzmodulation, da im vorliegenden Fall doch ein sehr schmales Frequenzband benötigt wird. Bei analoger Codierung auf Amplitudenbasis kann man einen Vergleichskanal verwenden, Amplitudenschwankungen werden dann bei den Nutzkanälen ausgeglichen.

In Fig.35 ist eine Teilnehmerschaltung dargestellt. Die 2-drähtige, quasi-4drähtige Teilnehmerleitung Tln geht über eine Schutzschaltung Sch und über Schaltkontakte SK, die für den Rufstrom und für Prüfzwecke vorgesehen sind zum Übertrager Ü. Die Speisung erfolgt über die Drossel SpDr von der Überwachung ÜW aus. Nach dem Übertrager führt die Leitung einmal zum Koppelfeld K und parallel dazu zum Register Rg. Vom Register aus wird die Wahl gesteuert und ausgewertet. Hier gibt es eine Vielzahl von Verfahren, die nur kurz erwähnt werden. Das Mehrfrequenztastwahlverfahren ist das heute am meisten benutzte. Dann gibt es ein Verfahren nach Patent DE 29 15 452 , bei dem durch die Zahl von Perioden eines Wechselstromes, der z.B. vom Register gesendet wird und so beim Teilnehmer beeinflusst wird, dass beim Rückfluss die jeweilige Amplitudenänderung messbar ist. Weiterhin ist ein Verfahren nach der Offenlegungsschrift DE P 29 38 776.6 bekannt, b i dem durch die Kombination der Länge von 2 Wechselströmen die Codierung erfolgt. Beide Verfahren sind so sicher wie das DTMF, sind aber nicht so aufwendig. Im Prozessor Pro wird die Wahlinformation ausgewertet und über die Steuereinrichtung St das Koppelfeld gesteuert. An die St ist eine Steuerleitung StLtg angeschlossen, über die Steuersignale an die übergeordnete Vermittlungsstelle sendet. Für EMD-Wähler ist z.B. eine Steuerung nach Patent DE 26 35 032 C2 zweckmässig.

In der Fig.31 ist ein Auszug aus einer Teilnehmerschaltung dargestellt, bei der die Vermittlungseinrichtungen und zwar die Endstufen zeitmultiplex ausgebildet sind. Es können hier auch die Hierarchiestufen des EWSD und des S12-Systems verwendet werden. Vom Teilnehmer wird z.B. ein 64 KHz Codewechselstrom gesendet , entsprechend der Fig.5. Über ein Filter Fi wird dieser einem Gleichrichter zugeführt und analog Fig.32 mit Hilfe eines Begrenzers in Gleichstromimpulse umgewandelt. Beim zeitmultiplexen Abgriff wird dann eine grosse oder kleine Spannung abgegriffen. In Fig.32 sind Halbwellen als binäre Codeelemente dargestellt, die gleichgerichtet und im Begrenzer zu Impulsen verarbeitet worden sind.

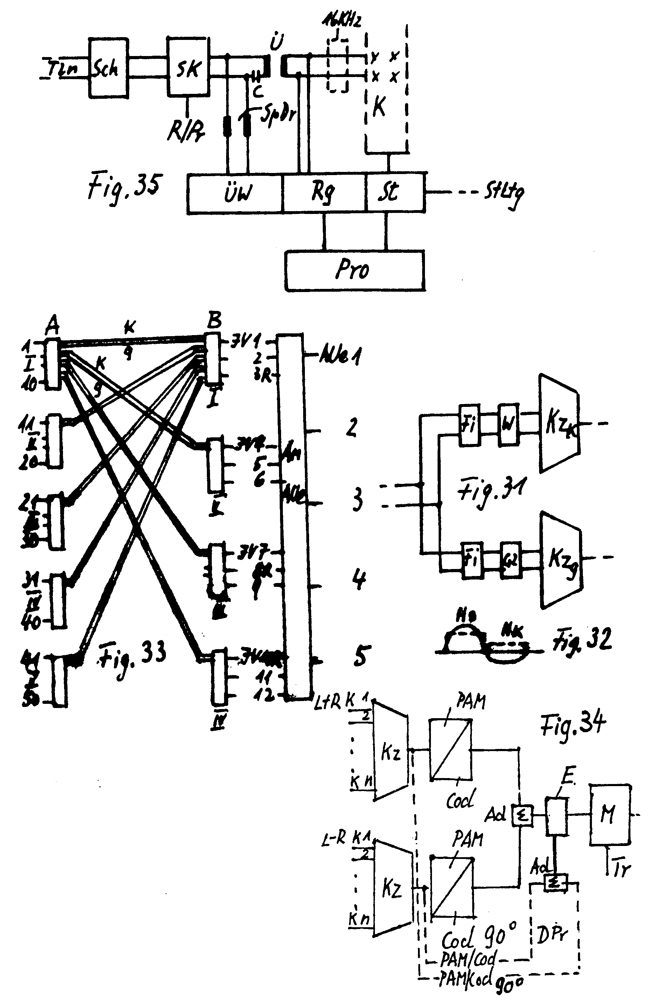

Mechanische Koppelfelder sind sehr teuer. Durch die quasi-4drähtige Durchschaltung werden nur die Hälfte Koppelelemente benötigt. Eine weitere Reduzierung von Koppelelementen ist in der Fig.33 dargestellt. Das Prinzip ist folgendes. Eine kleine Anlage mit Anruf- und Leitungskoppler benötigt während der Verbindung 2 Koppler. Bei der Erfindung wird nur während des Verbindungsaufbaues ein zentraler Leitungskoppler angeschaltet, der beim Melden des gerufenen Teilnehmers wieder abgeschaltet wird. Die Verbindung zum gerufenen Teilnehmer wird dann über den Anrufkoppler hergestellt. Die ausführliche Beschreibung ist in der Offenlegungsschrift DE 28 37 357 A1 dargelegt. Auf dem Prinzip dieser Erfindung können auch Stereo-Tonleitungen geschaltet werden, u.U. müssen dann mehrere Kanäle für diesen Zweck vorgesehen werden. Eine Teilstrecke einer solchen Verbindung kann auch über Funk gehen. In Fig.34 ist eine solche Anordnung dargestellt. Über Konentratoren für L+R und L-R - die Codierung erfolgt mit sinusförmigen Wechselströmen- werden Probeentnahmen abgegriffen und einem Umwandler PAM/Cod zugeführt. Der Codewechselstrom von L-R ist um 90 Grad Phasenverschoben, beide Wechselströme werden dann in Ad addiert und über einen Entkoppler E dem Modulator M zugeführt. Um Schwunderscheinungen auf dem Funkwege auszugleichen, ist eine 2. Codierung , gestrichelt eingezeichnet, mit einem anderen Codewechselstrom vorgesehen. Dieses Doppelprogramm DPr wird über einem Addierer Ad und dem Entkoppler E demselben Modulator zugeführt. Bei Einseitenbandmodulation wird dann nach dem Modulator noch ein Siebglied angeordnet, das den Träger und die obere oder untere Seitenfrequenzen aussiebt. Das Verfahren ist in der Patentanmeldung DE P 36 29 706.2 näher beschrieben.

Falls bei der Übertragung der Information nur die Sicherhei aber die Frequenz keine Rolle spielt kann man Codierungen entsprechend der Fig. 36 und 37 vorsehen. In Fig.36 wird das binäre Codeelement durch eine vorbestimmte Zahl von Perioden eines Wechselstromes und die Änderung des Kennzustandes durch eine Änderung der Amplitude markiert(A,A1). In Fig.37 wird das Codeelement analog durch die Zahl der Perioden und das folgende Coelement durch eine andere Amplitude markiert. (A,A1). In der Patentanmeldung DE 36 29 706.2 ist dieser Code näher beschrieben.

## Patentansprüche

1. Verfahren für die Codierung und Übertragung von Information für Selbstwählanlagen, von Endstellen über Anschlusswege bezw. Anschlussleitungen zur Vermittlung und umgekehrt von der Vermittlung über Anschlusswege zum Teilnehmer bezw. zwischen Endstellen unter zwischenschaltung einer oder mehrerer Vermittlungen, dadurch gekennzeichnet, daß ein Quasi-4-Draht Betrieb über 2-Draht Leitungen derart ermöglicht wird, dass im Ortsverkehr der gehende und kommende Verkehr in der normaler Sprachfrequenzlage (Fig.6, o,3-3.4 KHz) und der Fernverkehr in der einer Richtung in der normalen Sprachfrequenzlage und die andere Richtung über der Sprachfrequenzlage vorgesehen wird und zwar puls-pulscode-oder phasenmoduliert (Fig.14, 9,21) vorzugsweise durch die Amplituden der Halbwellen oder Perioden eines Wechselstromes nur einer Frequenz (Fig.9,14), wobei beim Teilnehmer und in der Vermittlung nur in den Einrichtungen für für den Fernverkehr Mittel für die Frequenzband verschiebung (Fig.6,A/PAM) und für die Trennung der beiden Frequenzlagen (Fig.6,TP) vorgesehen werden, die Wahleinrichtungen in der Vermittlung bestehen dabei nur aus Durchschaltenetzwerken, wie elektromechanische (Fig.6,K) oder elektronische Koppelfelder bezw. Wähler, bei Bedarf sind in den Einrichtungen für den Fernverkehr weitere Mittel, insbesondere zeitmultiplexe (Fig.5, Mu,DMu) bezw. frequenzmultiplexe für die Zusammenfassung bezw. Verteilung der Informationen , vorgesehen, wobei ggf. auch vorhandene TF-Einrichtungen verwendet werden (Fig.7,19,20).

2. Verfahren für die Codierung und Übertragung von Information für Selbstwählanlagen von Endstellen über Anschlusswege bezw. Anschlussleitungen zur Vermittlung und umgekehrt von der Vermittlung über Anschlusswege zum Teilnehmer bezw. zwischen Endstellen unter Zwischenschaltung einer oder mehrerer Vermittlungen, dadurch gekennzeichnet, daß ein Quasi-4-Draht Betrieb über 2-Draht Leitungen derart ermöglicht wird, dass im Orts- und Fernverkehr die eine Richtung in normaler Sprachfrequenzlage und die andere Richtung über der Sprachfrequenzlage vorgesehen wird, un zwar puls-pulscode- oder phasenmoduliert (Fig.14,9,21) vorzugsweise durch die Amplituden der Halbwellen bezw. Perioden eines Wechselstromes nur einer Frequenz (Fig.9, 14), wobei beim Teilnehmer und inder Vermittlung nur in den Einrichtungen für den Fernverkehr Mittel für die Frequenzbandverschiebung (Fig.6,A/PAM) und für die Trennung der beiden Frequenzbänder (Fig.6,TP) vorgesehen werden, die Wahleinrichtungen in der Vermittlung bestehen dabei nur aus Durchschaltenetzwerken, wie elektromechanische (Fig.6,K) oder aus elektronischen Koppelfeldern bezw. Wähler, bei Bedarf sind in den Einrichtungen für den Fernverkehr weitere Mittel, insbesondere zeit-(Fig.5, Mu,DMu) bezw. frequenzmultiplexe für die Zusammenfassung bezw. Verteilung der Informationen, vorgesehen, wobei ggf. auch vorhandene TF-Einrichtungen verwendet werden (Fig.7,19,20).

3. Verfahren für die Codierung und Übertragung von Information für Selbstwählanlagen, von Endstellen über Anschlusswege bezw. Anschlussleitungen zur Vermittlung und umgekehrt von der Vermittlung über Anschlusswege zum Teilnehmer bezw. zwischen Endstellen unter Zwischenschaltung einer oder mehrerer Vermittlungen, dadurch gekennzeichnet, daß ein Quasi-4-Draht Betrieb über 2-Draht Leitungen derart ermöglicht wird, dass Orts- und Fernverkehr der gehende und kommende Verkehr in unterschiedliche Frequenzlagen über dem Sprachfrequenzbereich angeordnet werden, wobei eine Codierung auf der Basis der Puls-Pulscode- oder Phasenmodulation vorgesehen wird vorzugweise durch die Amplituden der Halbwellen oder Perioden eines Wechselstromes nur einer Frequenz (Fig.9,14), die Mittel für die Codierung sind dabei beim Teilnehmer und in der Vermittlung nur in den Einrichtungen für den Fernverkehr angeordnet Fig.6, A/PAM) und auch die Mittel für die Trennung der Frequenzbereiche, die Wahleinrichtungen in der Vermittlung bestehen dabei nur aus Durchschaltenetzwerke, wie elektromechanische (Fig.5,K) oder elektronische Koppelfelder bezw. Wähler, bei Bedarf sind in den Einrichtungen für den Fernverkehr weitere Mittel, insbesondere zeitmultiplexe (Fig.5,Mu,DMu) bezw. frequenzmultiplexe für die Zusammenfassung bezw. Verteilung der Informationen, angeordnet, wobei ggf. auch vorhandene TF-Einrichtungen verwendet werden (Fig.7,19,20).

4. Verfahren nach den Ansprüchen 1-3 für die Codierung und Übertragung von Information für Selbstwählanlagen, von Endstellen über Anschlusswege bezw. Anschlussleitungen zur Vermittlung und umgekehrt von der Vermittlung über Anschlusswege zum Teilnehmer bezw. zwischen Endstellen unter Zwischenschaltung einer oder mehrerer Vermittlungen, dadurch gekennzeichnet, dass die PAM- (Fig.14a, P1,P2,..) oder PAM/PCM-codierte (Fig.9) Information eines oder mehrerer zu einer Endstelle gehörenden Anschlüsse, auch verschiedener Arten (z.B. Fernsprechen,Bildfernsprechen, Telefax,...) zeitmulitplex geordnet und auf die Amplituden von Halbwellen oder Perioden zweier gegeneinander um 90° phasenverschobener Wechselströme gleicher Frequenz übertragen und für die Stromwegübertragung addiert werden (Fig.17,29).

5. Verfahren für die Dämpfungskompensation für Anschlussleitungen bei Selbstwählanalgen, dadurch gekennzeichnet, dass alle Anschlussleitungen in der Weise an die grösste zulässige Anschlussleitungsdämpfung angepasst werden, indem in gemeinsamen Gliedern, wie Verbindungssätzen, Fernleitungsanpassungen, variable Verlängerungsleitungen vorgesehen werden (Fig.5,VL,Rg), die in der Weise gesteuert werden, indem in einem Register die Dämpfungen der Teilnehmeranschlussleitungen gespeichert werden und bei der Wahl des jeweiligen Teilnehmers eine Einstellung der Verlängerungsleitung auf einen im Speicher festgelegten Wert erfolgt, wobei an Stelle einer Speicherung auch durch eine Messung nach der Belegung die Dämpfung der jeweiligen Anschlussleitung ermittelt werden kann.

6. Verfahren nach den Ansprüchen 1 bis 3, dadurch gekennzeichnet, dass zur Vermeidung von Geräuschen und der Stabilität bei der Zählung während des Gespräches die Zählung unmittelbar beim Teilnehmer in der Weise erfolgt, indem mit dem Melden des gerufenen Teilnehmers dem rufenden Teilnehmer von der Vermittlung aus das Beginn- und ggf. auch das Zonenkennzeichen übermittelt wird, wobei auch das Zonenkennzeichen beim rufenden Teilnehmer aus der Rufnummer des gerufenen Teilnehmers festgestellt werden kann, weiterhin sind beim rufendenden Teilnehmer Mittel angeordnet, die aus der Zone die Zählimpulsfolge festlegen.

7. Verfahren nach den Ansprüchen 1 bis 3, dadurch gekennzeichnet, dass eine Zeitkoppelstufe in der Weise konzipiert wird (Fig.5,ZK), indem die Halbwellen bezw. Periodencodeelemente der Teilnehmerinformation in der Einrichtung für den Fernverkehr zu Rechteckimpulsen geformt werden und dass die Periodendauer des Multiplexers für die Bündelung gleich der Halb- bezw. Periodendauer eines Codeelementes der Teilnehmerinformation ist.

8. Verfahren nach den Ansprüchen 1 bis 3, dadurch gekennzeichnet, dass eine schmalbandige analoge oder digitale Codierung der Information in der Weise erfolgt, indem jedem Codeelement eine vorbestimmte Zahl von Perioden eines Wechselstromes der gleichen Frequenz zugeordnet wird (Fig.36,37), wobei die Änderung des analogen oder digitalen Kennzustandes durch die Zahl der Perioden oder durch eine Änderung der Amplitude, die auch kontinuierlich sein kann, markiert wird.

9. Verfahren nach den Ansprüchen 1 bis 3, dadurch gekennzeichnet, dass eine Frequenzverkleinerung der Codierwechselströme insbesondere für Zwecke der Verwendung elektronischer Koppelfelder in den Ortsvermittlungsstellen, in der Weise erfolgt, indem mehrere Codierwechselströme vorgesehen werden, deren Frequenzen nur die halbe, viertelte usw. Abgriffsfrequenz aufweisen (Fig.8,14) die gegeneinander jeweils um 90° phasenverschoben sind, die Werte der Probeentnahmen sind durch die Grösse der Amplituden der Halbwellen bezw. festgelegt.

10. Verfahren nach den Ansprüchen 1 bis 3, dadurch gekennzeichnet, dass die Codierwechselströme einer Frequenz frequenzmoduliert übertragen werden. (Fig.13)

## Claims

1. A method of coding and transmitting information for automatic telephone systems, from subscriber's apparatus via subscriber's lines or paths to the exchange and vice versa from the exchange via subscriber's paths to the subscriber or between subscribers's apparatus with interposition of one or more exchanges, characterised in that quasi four-wire operation is made possible via two-wire lines in that during local exchange the outgoing and incoming traffic is provided in the normal voice frequency position (Fig. 6, 0.3 - 3.4 kHz) and the long-distance traffic is provided in the normal voice frequency position in one direction and above the voice frequency position in the other direction and is pulse-pulse code modulated or phase-modulated (Fig. 14, 9, 21), preferably via the amplitudes of the half-waves or periods of an AC current at only one frequency (Figs. 9, 14), and in the case of the subscriber and in the exchange only the long-distance traffic equipment is provided with means for frequency-band shifting (Fig. 6, A/PAM) and for separating the two frequency positions (Fig. 6, TP) and the selector equipment in the exchange consists only of interconnection networks, e.g. electromechanical (Fig. 6, K) or electronic coupling compartments or selectors, and optionally the long-distance traffic equipment is provided with additional means, more particularly time-multiplex (Fig. 5, Mu, DMu) or frequency-multiplex, for combination or distribution of information, optionally also using existing carrier-frequency equipment (Fig. 7, 9, 20).

2. A method of coding and transmitting information for automatic telephone systems, from subscriber's apparatus via subscriber's lines or paths to the exchange and vice versa from the exchange via subscriber's paths to the subscriber or between subscribers's apparatus with interposition of one or more exchanges, characterised in that quasi four-wire operation is made possible via two-wire lines in that in local and long-distance traffic one direction is provided in the normal voice frequency position and the other direction is provided above the voice frequency position, i.e. either pulse-pulse code modulated or phase modulated (Figs. 14, 9, 21), preferably via the amplitudes of the half-waves or periods of an AC current at only one frequency (Figs. 9, 14), and in the case of the subscriber and in the exchange, only the long-distance traffic equipment is provided with means for frequency band shifting (Fig. 6, A/PAM) and for separating the two frequency bands (Fig. 6, TP), and the selector equipment in the exchange consists only of interconnection networks, e.g. electromechanical (Fig. 6, K), or electronic coupling compartments or selectors, and optionally the long-distance traffic equipment is provided with additional means, more particularly time-multiplex (Fig. 5, Mu, DMu) or frequency-multiplex, for combination or distribution of information, optionally also using existing carrier-frequency equipment (Figs. 7, 19, 20).

3. A method of coding and transmitting information for automatic telephone systems, from subscriber's apparatus via subscriber's lines or paths to the exchange and vice versa from the exchange via subscriber's paths to the subscriber or between subscribers's apparatus with interposition of one or more exchanges, characterised in that quasi four-wire operation is made possible via two-wire lines in that the local and long-distance traffic, outgoing and incoming, is disposed in different frequency positions above the voice frequency range, coding being provided on the basis of pulse-pulse code or phase modulation, preferably via the amplitudes of the half-waves or periods of an AC current at only one frequency (Figs. 9, 14), and the means for coding, in the case of the subscriber and in the exchange, are disposed only in the long-distance traffic equipment (Fig. 6, A/PAM) and also the means for separating the frequency ranges, and the selector equipment in the exchange consists only of interconnection networks, e.g. electromechanical (Fig. 5, K) or electronic coupling compartments or selectors, and optionally the long-distance traffic equipment comprises additional means, more particularly time multiplex (Fig. 5, Mu, DMu) or frequency-multiplex for combination or distribution of information, optionally also using existing carrier-frequency equipment (Figs. 7, 19, 20).

4. A method according to claims 1 - 3 of coding and transmitting information for automatic telephone systems, from subscriber's apparatus via subscriber's lines or paths to the exchange and vice versa from the exchange via subscriber's paths to the subscriber or between subscriber's apparatus with interposition of one or more exchanges, characterised in that the PAM-coded (Fig. 14a, P1, P2, ...) or PAM/PCM-coded (Fig. 9) information from one or more connections belonging to a subscriber's apparatus, which may also be of different kinds (e.g. telephone, videophone, telefax, etc.) are disposed in time-multiplex manner and transmitted at the amplitudes of half-waves or periods of two AC currents having the same frequency and phase-shifted by 90° and are added for transmitting the current path (Figs. 17, 29).

5. A method of compensating the attenuation of subscriber's lines in automatic telephone systems, characterised in that all subscriber's lines are adapted to the maximum permissible attenuation by providing variable extension lines in common components such as connector sets or trunk line matching means (Fig. 5, VL, Rg), the variable extension lines being controlled by storing the attenuations of the subscriber's lines in a register and when each subscriber is selected, the extension line is adjusted to a value fixed in the store, or as an alternative to storage, the attenuation of the respective subscriber's line can be determined by a measurement after holding.

6. A method according to claims 1 to 3, characterised in that order to avoid noise and for the sake of stability in metering, during the conversation, metering is brought about immediately at the subscriber's station, in that when the called subscriber answers, the start signal and optionally the zone signal is transmitted by the exchange to the calling subscriber, and the zone signal can also be determined by the calling subscriber from the call number of the called subscriber, and the calling subscriber is provided with means which determine the metering pulse sequence from the zone.

7. A method according to claims 1 to 3, characterised in that a time coupling stage is designed (Fig. 5, ZK) by converting the half-waves or period code elements of the subscriber information into square pulses in the long-distance traffic equipment, and the period duration of the multiplexer for bunching is equal to half or all the period duration of a code element in the subscriber information.

8. A method according to claims 1 to 3, characterised in that narrow-band analog or digital coding of information is brought about by assigning each code element a given number of periods of an AC at the same frequency (Fig. 36, 37), the change in the analog or digital significant condition being marked by the number of periods or by an alteration of the amplitude, which can also be continuous.

9. A method according to claims 1 to 3, characterised in that the frequency of the coding AC currents is reduced, more particularly for the purpose of using electronic coupling compartments in the local exchanges, by providing a number of coding AC currents having frequencies only half or a quarter etc. of the tapping frequency (Figs. 8, 14) and phase-shifted by 90° relative to one another, and the values of the samples are determined by the value of the amplitudes of the half-waves.

10. A method according to claims 1 to 3, characterised in that the coding AC currents at one frequency are frequency-modulated in transmission (Fig. 13).

## Revendications

1. Procédé de codage et de transmission d'informations pour postes à composition automatiques des muméros, depuis des postes terminaux et par des voies de raccordement ou des lignes d'abonné vers le poste de liaison, et inversement depuis le poste de liaison par des voies de raccordement vers l'abonné, ou entre postes terminaux avec insertion d'un ou plusieurs postes de liaison, caractérisé en ce qu'un quasi-fonctionnement à quatre fils est rendu possible par des lignes à deux fils en faisant en sorte que dans le trafic local le trafic partant et le trafic arrivant soient prévus dans la plage normale des fréquences vocales (figure 6, 0,3-0,4 KHz) alors que le trafic interurbain est prévu dans une direction dans la plage normales des fréquences vocal es et dans l'autre direction dans une plage de fréquences vocales modulée en impulsions, codes d'impulsions ou phases (figures 14, 9, 21), de préférence par les amplitudes des demi-ondes ou périodes d'un courant alternatif de fréquence unique (figures 9, 14), alors que pour l'abonné et au poste de liaison des moyens de déplacement de bande de fréquences (figure 6, A/PAM) et de séparation des deux plages de fréquences (figure 6, TP) ne sont prévus que dans les dispositifs pour le trafic interurbain, les dispositifs de sélection dans le poste de liaison ne sont constitués que par des réseaux de connexion tels que des champs de couplage ou des sélecteurs électromécaniques (figure 6, K) ou électroniques alors qu'en cas de besoin sont prévus dans les dispositifs de trafic interurbain d'autres moyens, notamment de multiplexage dans le temps (figure 5, Mu, DMu) ou de multiplexage en fréquence pour le groupement ou la distribution des informations, et que sont éventuellement utilisés des dispositifs TF également présents (figures 7, 19, 20).

2. Procédé de codage et de transmission d'informations pour postes à composition automatiques des numéros, depuis des postes terminaux et par des voies de raccordement ou des lignes d'abonné vers le poste de liaison, et inversement depuis le poste de liaison par des voies de raccordement vers l'abonné, ou entre postes terminaux avec insertion d'un ou plusieurs postes de liaison, caractérisé en ce qu'un quasi-fonctionnement à quatre fils est rendu possible par des lignes à deux fils en faisant en sorte que pour le trafic local et le trafic interurbain soient prévues une direction dans la plage normale des fréquences vocales et l'autre direction dans une plage de fréquences vocales modulées en impulsions, codes d'impulsions ou phases (figures 14, 9, 21) , de préférence par les amplitudes des demi-ondes ou périodes d'un courant alternatif de fréquence unique (figures 9, 14) alors que ne sont prévus chez l'abonné et dans le poste de liaison des moyens pour le déplacement des bandes de fréquences (figure 6, A/PAM) et la séparation des deux bandes de fréquences (figure 6, TP) que dans les dispositifs pour le trafic interurbain, les dispositifs de sélection dans le poste de liaison consistant seulement en des réseaux de connexion tels que des champs de couplage ou des sélecteurs électromécaniques (figure 6, K) ou électroniques, alors qu'en cas de besoin sont prévus dans les dispositifs destinés au trafic interurbain d'autres moyens, notamment de multiplexage dans le temps (figure 5, Mu, DMu) ou de multiplexage en fréquences pour le groupement ou la distribution des informations, et que sont éventuellement utilisés des dispositifs TF également présents (figures 7, 19, 20).

3. Procédé de codage et de transmission d'informations pour postes à composition automatiques des numéros depuis des postes terminaux et par des voies de raccordement ou des lignes d'abonné vers le poste de liaison, et inversement depuis le poste de liaison par des voies de raccordement vers l'abonné ou entre postes terminaux avec insertion d'un ou plusieurs postes de liaison, caractérisé en ce qu'un quasi-fonctionnement à quatre fils est rendu possible par des lignes à deux fils en faisant en sorte que pour le trafic local et le trafic interurbain le trafic partant et le trafic arrivant soient prévus dans des zones de fréquences différentes dans la plage des fréquences vocales, un codage sur la base d'une modulation des impulsions, des codes d'impulsions ou des phases étant prévu, de préférence par les amplitudes des demi-ondes ou périodes d'un courant alternatif de fréquence unique (figures 9, 14), les moyens de codage étant alors prévus chez l'abonné et dans le poste de liaison seulement dans les dispositifs de trafic interurbain (figure 6, A/PAM) et également les moyens pour la séparation des plages de fréquences, les dispositifs de sélection du poste de liaison consistant seulement en des réseaux de transmission tels que des champs de couplage électromagnétiques (figure 5, K) ou électroniques, tandis qu'en cas de besoin sont disposés dans les dispositifs de trafic interurbain d'autres moyens notamment de multiplexage dans le temps (figure 5, Mu, DMu) ou de multiplexage en fréquences pour le groupement ou la distribution des informations, et que sont éventuellement utilisés des dispositifs TF également présents (figures 7, 19, 20).

4. Procédé selon les revendications 1 à 3, pour le codage et la transmission d'informations pour postes à composition automatiques des numéros, depuis des postes terminaux et par des voies ou des lignes de raccordement pour la transmission, et inversement depuis le poste de liaison par des voies de raccordement vers l'abonné ou entre postes terminaux par incorporation d'un ou plusieurs postes de liaison. caractérisé en ce que l'information codée PAM (figures 14a, P1, P2,...) ou PAM/PCM (figure 9) d'un ou plusieurs raccordements appartenant à un poste terminal ainsi que des types divers (par exemple des conversations interurbaines, des conversations téléphoniques avec image, des fax, ...) sont multiplexés dans le temps et transmis sur les amplitudes des demi-ondes ou des périodes de deux courants alternatifs de même fréquence décalés en phase de 90° et sont additionnés pour la transmission des trajets du courant (figures 17, 29).

5. Procédé de compensation d'atténuation pour lignes de raccordement de postes à composition automatiques des numéros caractérisé en ce que toutes les lignes de raccordement sont adaptées à l'atténuation la plus importante admissible, des lignes de complément variables étant prévues dans des éléments communs tels que des phrases de liaison, des adaptations de lignes interurbaines (figure 5, VL, Rg) qui sont commandées de manière que les atténuations des lignes de raccordement à abonnés soient mises en mémoire dans un registre et que par sélection de l'abonné il en résulte un réglage de la ligne de complément sur une valeur mise en mémoire, alors qu'il est possible à l'emplacement de mémoire et par une mesure après blocage de la ligne de déterminer l'atténuation de la ligne de raccordement en cause.

6. Procédé selon les revendications 1 à 3, caractérisé en ce que pour éviter les bruits et la stabilité pendant le comptage au cours de la communication, le comptage s'effectue directement chez l'abonné de manière que l'identification de début et éventuellement également l'identification de zone soient transmises avec l'enregistrement de l'abonné appelé à l'abonné qui appelle par le poste de liaison, l'identification de zone pouvant être également déterminée chez l'abonné qui appelle par le numéro d'appel de l'abonné appelé, des moyens étant par ailleurs prévus chez l'abonné qui appelle qui déterminent à partir de la zone la succession des impulsions de comptage.

7. Procédé selon les revendications 1 à 3, caractérisé en ce qu'un étage de couplage dans le temps est conçu (figure 5, ZK) de façon que les demi-ondes ou les éléments de code de période de l'information sur l'abonné soient formés dans le dispositif pour trafic interurbain en impulsions rectangulaires, et en ce que la durée des périodes du multiplexeur destinées à la concentration est égale à la durée de la demi-période ou de la période d'un élément de code de l'information d'abonné.

8. Procédé selon les revendications 1 à 3, caractérisé en ce que s'effectue un codage analogique ou numérique à bande étroite de l'information, de manière qu'un nombre prédéterminé de périodes d'un courant alternatif de fréquence constante soit associé à chaque élément de code (figures 36, 37), la modification de l'état distinctif analogique ou numérique , qui peut être également continue, étant marquée par le nombre des périodes ou par la modification de l'amplitude.

9. Procédé selon les revendications 1 à 3, caractérisé en ce qu'une diminution de la fréquence des courants alternatifs de codage s'effectue, en particulier pour utiliser des champs de couplage électroniques dans les postes de transmission locaux, en prévoyant plusieurs courants alternatifs de codage, dont les fréquences qui sont décalés en phase de 90° ne comportent que la moitié, le quart, etc. de la fréquence de branchement (figures 8, 14), les valeurs des prélèvements d'échantillons étant déterminées par l'importance des amplitudes des demi-ondes.

10. Procédé selon les revendications 1 à 3, caractérisé en ce que les courants alternatifs de codage d'une fréquence sont transmis en étant modulés en fréquence (figure 13).
